# EUROPÄISCHE PATENTSCHRIFT

(11) **EP 1 298 300 B1**
(45) Veröffentlichungstag und Bekanntmachung des Hinweises auf die Patenterteilung: **16.03.2005**
(21) Anmeldenummer: 02017579.0
(22) Anmeldetag: 07.08.2002
(51) Int. Cl.: F02D 13/06, F02D 17/02, F01L 13/00

(54) **Momentenneutrale Zylinderabschaltung durch Deaktivierung von Gaswechselventilen**
Cylinder cutout with neutral torque by deactivating engine valves
Mise hors service, neutre pour le couple moteur, de cylindres par déactivation de soupapes

(30) Priorität: 29.09.2001 DE 10148347
(43) Veröffentlichungstag der Anmeldung: 02.04.2003
(73) Patentinhaber: ROBERT BOSCH GMBH, 70442 Stuttgart (DE)
(72) Erfinder: Schaefer-Siebert, Dietrich, 70825 Korntal-Muenchingen (DE)

(56) Entgegenhaltungen:
- DE-A- 19 604 737
- DE-A- 19 606 584
- DE-A- 19 628 024
- US-A- 5 267 541
- HARTIG ET AL: "die BMW Zylinderabschaltung" ATZ AUTOMOBILTECHNISCHE ZEITSCHRIFT, FRANCKH'SCHE VERLAGSHANDLUNG. STUTTGART, DE, Bd. 2, Nr. 83, 1. Februar 1981 (1981-02-01), Seiten 69-73, XP002075051 ISSN: 0001-2785
- PATENT ABSTRACTS OF JAPAN vol. 015, no. 085 (M-1087), 27. Februar 1991 (1991-02-27) & JP 02 305307 A (HONDA MOTOR CO LTD), 18. Dezember 1990 (1990-12-18)

## Beschreibung

Die Erfindung betrifft die Abschaltung und Zuschaltung von Zylindern eines Verbrennungsmotors durch Deaktivierung und Aktivierung der Gaswechselventile der betroffenen Zylinder.

Aus der US 5 787 855 ist eine Abschaltung von Zylindergruppen eines Verbrennungsmotors durch die Deaktivierung von Gaswechselventilen bekannt. Bei Motoren mit vielen Zylindern gibt es Fahrsituationen, in denen die erforderliche Leistung bereits von einem Teil der Zylinder bereitgestellt werden kann. Die Abschaltung eines oder mehrerer Zylinder führt dazu, dass die übrigen weiter betriebenen Zylinder mit erhöhter Leistung und besserem Wirkungsgrad betrieben werden. Die EP 37269 zeigt ebenfalls eine Abschaltung von Gaswechselventilen. Eine stufenlose Verstellung des Ventilhubs ist aus der DE 195 01 386 bekannt.

Die Deaktivierung und die Aktivierung von Zylindern soll für den Fahrer möglichst nicht spürbar sein. Insbesondere soll beim Wechsel zwischen Vollmotorbetrieb, bei dem alle Zylinder arbeiten, und Teilmotorbetrieb, bei dem wenigstens ein Zylinder abgeschaltet ist, keine sprunghafte Drehmomentänderung auftreten.

Der vorliegenden Erfindung liegt das Problem zugrunde, eine möglichst einfache, für den Fahrer nicht spürbare Zylinderabschaltung und Zylinderzuschaltung zu realisieren.

Dieses Problem wird durch die Merkmalskombination des Anspruchs 1 gelöst.

Im einzelnen erfolgt der erfindungsgemäße Wechsel zwischen Vollmotorbetrieb und Teilmotorbetrieb eines mehrzylindrigen Verbrennungsmotors, bei dem wenigstens die Einlassventile oder die Auslassventile eines Zylinders oder einer Gruppe von Zylindern im Vollmotorbetrieb aktiviert und im Teilmotorbetrieb deaktiviert sind, dadurch, dass in einem ersten Schritt eine Drosselung der Leistung der zu deaktivierenden Zylinder und gleichzeitig eine Erhöhung der Leistung der anderen Zylinder so erfolgt, dass das vom Motor abgegebene Gesamtmoment einem vorgegebenen Motorsollmoment folgt und dass in einem zweiten Schritt eine Abschaltung der gedrosselten Zylinder über die schaltbaren Ein- oder Auslassventile dieser Zylinder erfolgt.

Zur Wiederaktivierung der abgeschalteten Zylinder, also zum Wechsel vom Teilmotorbetrieb zum Vollmotorbetrieb, erfolgt in einem ersten Schritt eine Zuschaltung der gedrosselten Zylinder über die schaltbaren Ein- oder Auslassventile und in einem zweiten Schritt eine Entdrosselung der Leistung der wieder zu aktivierenden Zylinder und gleichzeitig eine Verringerung der Leistung der anderen Zylinder so, dass das vom Motor abgegebene Gesamtmoment einem vorgegebenen Motorsollmoment folgt.

Mit diesem Vorgehen ist der Vorteil verbunden, dass der Wechsel zwischen Teil- und Vollmotorbetrieb nicht durch ein plötzliches hartes und damit spürbares Umschalten erfolgt. Vielmehr wird die Verlagerung der Drehmomentbereitstellung von allen Zylindern auf einen Teil der Zylinder zeitlich ausgedehnt und zumindest näherungsweise gleichmäßig vorgenommen.

Dadurch ergeben sich besondere Vorteile bei variablen Ventilsteuerungen mit hohen zeitlichen Toleranzen im Abschaltverhalten. Darunter wird folgendes verstanden:

Der Wechsel zwischen Teil- und Vollmotorbetrieb und umgekehrt wird durch einen Steuerbefehl ausgelöst. Zwischen dem Zeitpunkt des Auslösens des Wechsels durch den Steuerbefehl und dem Zeitpunkt, zu dem der Wechsel wirksam wird, vergeht eine gewisse Zeitspanne, die von den konstruktiven Eigenschaften der Ventilsteuerung abhängig ist. Eine hohe Toleranz oder Schwankungsbreite dieser Zeitspanne hat zur Folge, dass zwischen der Änderung des von den anderen Zylindern bereitgestellten Drehmomentes und dem effektiven Wechsel zwischen beiden :Motorbetriebsarten eine Zeitdifferenz auftreten kann, so dass der Wechsel unerwünschterweise für den Fahrer spürbar ist. Systeme, bei denen ein variabler Ventilhub durch die Relativpositionen einer Öffnungsnockenwelle und einer Schließnockenwelle bestimmt wird, die durch ein mechanisches Koppelgetriebe verbunden sind, können beispielsweise solche zeitlichen Toleranzen aufweisen. Ein System mit Öffnungs- und Schließnockenwelle wird in der eingangs genannten DE 195 01 386 beschrieben. Die sich bei der Erfindung ergebende zeitliche Ausdehnung und Gleichmäßigkeit der Verlagerung der Drehmomentbereitstellung zwischen den Zylindern sorgt dafür, dass auch bei zeitlichen Differenzen zwischen dem Verringern des Drehmomentes abzuschaltender Zylinder und dem Erhöhen des Drehmomentes der weiterzubetreibenden Zylinder nie die volle Drehmomentänderung einer Zylindergruppe plötzlich wirksam wird.

Eine Ausgestaltung der Erfindung sieht vor, daß ein Verbrennungsmotor sowohl für die abzuschaltenden Zylinder als auch die weiterzubetreibenden Zylinder jeweils eine eigene Drosselvorrichtung, bspw. eine eigene Drosselklappe besitzt. Bei diesem Ausführungsbeispiel erfolgt die - Drosselung der Leistung der zu deaktivierenden Zylinder über ein Schließen der zugehörigen ersten Drosselvorrichtung und die Erhöhung der Leistung der weiterzubetreibenden Zylinder über eine Öffnung der Drosselvorrichtung der zugehörigen weiterzubetreibenden Zylinder.

Zum Wiedereinschalten der abgeschalteten Zylinder erfolgt eine Entdrosselung der wieder zu aktivierenden Zylinder über ein Öffnen der ersten Drosselvorrichtung und eine Verringerung der Leistung der übrigen Zylinder über eine verringerte Öffnung der Drosselvorrichtung der übrigen Zylinder.

Dies liefert den Vorteil, dass die Erfindung auch bei Ventilbetätigungen verwendet werden kann, deren Öffnungshub nur digital zwischen Null und vollständiger Öffnung eingestellt werden kann.

Eine weitere Ausgestaltung der Erfindung betrifft einen Verbrennungsmotor mit stetig oder zumindest feinstufig verstellbarem Hub der Einlaßventile. Hier erfolgt die Drosselung der Leistung der zu deaktivierenden Zylinder über eine Verringerung des Hubes ihrer Einlassventile und die Erhöhung der Leistung der weiterzubetreibenden Zylinder erfolgt über eine Vergrößerung des Hubes der ihrer Einlassventile.

Für die Wiederaktivierung der deaktivierten Zylinder erfolgt eine Entdrosselung dieser Zylinder über eine Vergrößerung des Hubes der wieder zu aktivierenden Einlassventile und eine Verringerung der Leistung der übrigen Zylinder über eine Verringerung des Hubes der Einlassventile der übrigen Zylinder.

Damit ist eine weitere separate Drosselvorrichtung, wie sie beim Gegenstand einer weiter oben genannten Ausgestaltung benötigt wird, verzichtbar.

Weitere Vorteile ergeben sich bei Motoren mit je einem Steuergerät für die abzuschaltenden und die weiterzubetreibenden Zylinder: Derartige Steuergeräte sind üblicherweise mit einem Bussystem verbunden. Die Informationen werden über das Bussystem nicht synchron mit den Rechenprogrammen der einzelnen Steuergeräte ausgetauscht, die mit der Bewegung der Kurbelwelle des Motors synchronisiert ablaufen. Bei einem digitalen Abschalten der einen Zylindergruppe kann es daher zu einem Zeitversatz zur digitalen Erhöhung der Leistung der anderen Zylindergruppe kommen, was der Fahrer als Ruck spürt.

Bei der Erfindung wird dagegen nicht digital umgeschaltet, sondern es wird ein gleichmäßiger Übergang ausgelöst. Wegen der Gleichmäßigkeit des Übergangs kommt es auch dann nicht zu einem Ruck, wenn das eine Steuergerät diesen gleichmäßigen Übergang etwas früher beginnt als das andere Steuergerät den gegenläufigen Übergang.

Insgesamt bewirkt die Erfindung eine Optimierung der Gleichmäßigkeit der Drehmomentabgabe beim Wechsel zwischen Voll- und Teilmotorbetrieb bei verringerten Anforderungen an die konstruktive Verwirklichung der Abschaltung der Ventile.

Die Erfindung richtet sich auch auf eine elektronische Steuereinrichtung zur Durchführung wenigstens eines der oben genannten Verfahren oder eines der Ausführungsformen. Im folgenden werden Ausführungsbeispiele der Erfindung unter Bezug auf die Figuren erläutert.

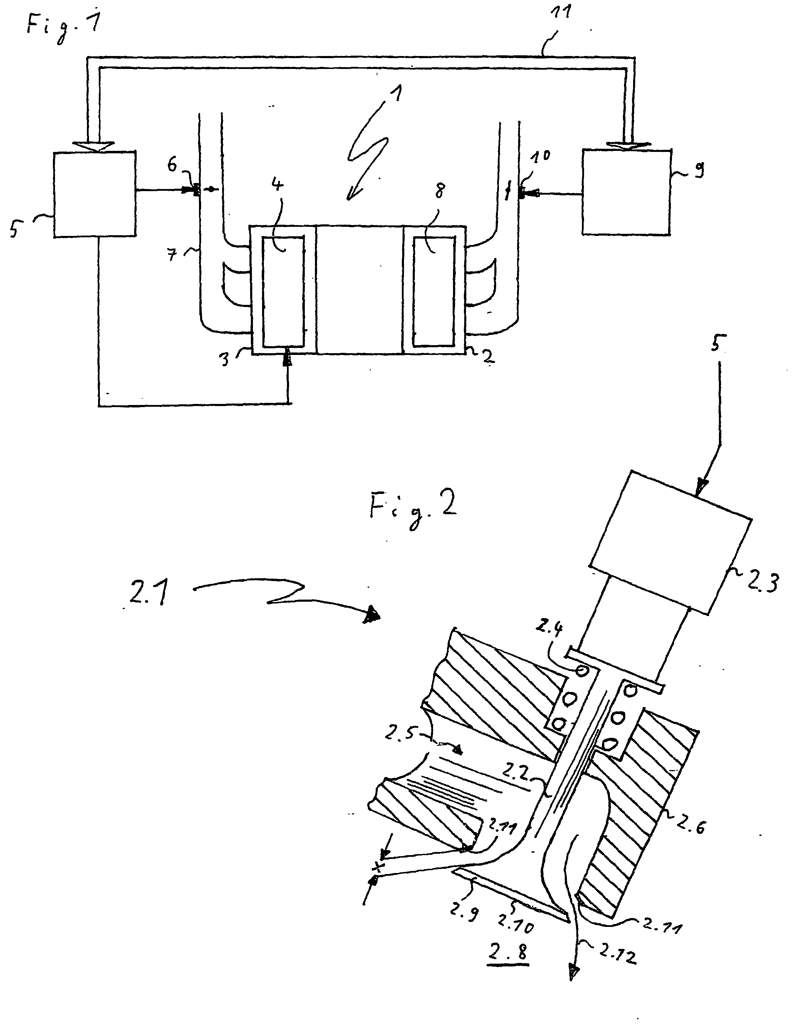

Fig. 1 zeigt das technische Umfeld eines Ausführungsbeispiels der Erfindung.

Die 1 in der Fig. 1 bezeichnet einen Verbrennungsmotor mit einer rechten Zylinderbank 2 und einer linken Zylinderbank 3. Die linke Zylinderbank verfügt über eine Gaswechselsteuerung 4 mit aktivierbaren und deaktivierbaren Gaswechselventilen, deren Aktivierungszustand von einem Steuergerät 5 bestimmt wird. Das Steuergerät 5 bestimmt weiterhin den Öffnungswinkel alpha_6 einer Drosselklappe 6 im linken Saugrohr 7. Die rechte Zylinderbank verfügt analog über eine Gaswechselsteuerung 8, die in dem dargestellten Beispiel nicht deaktivierbar ist, und über ein Steuergerät 9, das den Öffnungswinkel alpha_10 der Drosselklappe 10 im rechten Saugrohr steuert. In der dargestellten Stellung der Drosselklappen sind die Zylinder der linken Bank deaktiviert. Die Drosselklappe der linken Bank ist daher geschlossen und die Drosselklappe der rechten Bank ist weiter als im Normalfall geöffnet. Die Steuergeräte sind in dem dargestellten Beispiel über ein Bussystem 11 verbunden.

Anstelle dieser zwei über ein Bussystem verbundenen Steuergeräte kann auch ein einziges Steuergerät den Aktivierungszustand der Gaswechselventile und den Öffnungsgrad der Drosselklappen steuern. Die Steuergeräte übernehmen noch weitere Funktionen, wie die Verarbeitung von Eingangssignalen über Betriebsparameter des Verbrennungsmotors und die Steuerung weiterer Größen, insbesondere der Kraftstoffzumessung und der Zündung.

Fig. 2 zeigt einen Gaswechselventilsteller 2.1 als wesentliche Komponente der deaktivierbaren Gaswechselsteuerung 4 mit einem Gaswechselventil 2.2, einer Betätigungsvorrichtung 2.3 und einer Ventilfeder 2.4. Die Ziffer 2.6 repräsentiert einen Zylinderkopf mit einem Gaskanal 2.5. Die Verbindung des Gaskanals zum Brennraum 2.8 eines Zylinders wird durch das Ventil 2.2 geöffnet oder geschlossen.

Im geschlossenen Zustand liegt die Dichtfläche 2.9 des Ventiltellers 2.10 federbelastet auf dem Ventilsitz 2.11 des Zylinderkopfes 2.6 auf. Die Verbindung wird durch Abheben des Ventiltellers 2.11 um einen Ventilhub x durch Betätigung des Ventils 2.2 gegen die Federkraft durch die Betätigungsvorrichtung 2.3 geöffnet.

Die Betätigungsvorrichtung kann beispielsweise eine elektrisch gesteuerte Hydraulik oder Mechanik enthalten. Wesentlich im Zusammenhang mit der Erfindung ist, dass sich die Zylinder durch eine Beeinflussung der Betätigungsvorrichtung durch eine Deaktivierung der Gaswechselventile deaktivieren lassen.

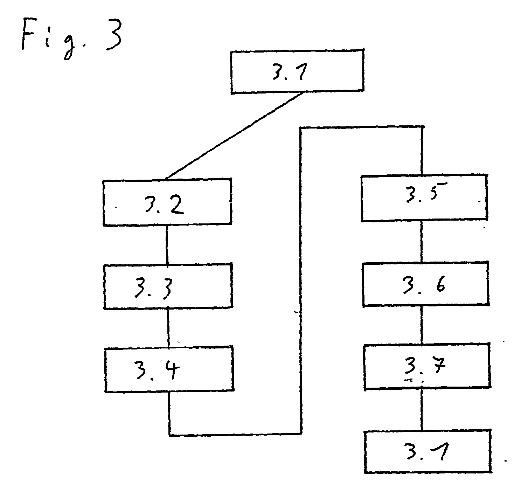

Figur 3 zeigt ein Flussdiagramm als Ausführungsbeispiel des erfindungsgemäßen Verfahrens zum Wechsel zwischen Vollmotorbetrieb und Teilmotorbetrieb eines mehrzylindrigen Verbrennungsmotors. Block 3.1 repräsentiert ein Hauptprogramm zur Motorsteuerung, in dem Einspritzzeiten, Zündzeitpunkte usw. berechnet und ausgegeben werden. Im Folgenden wird davon ausgegangen, dass der Motor zunächst im Vollmotorbetrieb mit allen Zylindern betrieben wird. Im Rahmen des Hauptprogramms wird unter vorbestimmten Bedingungen der Teilmotorbetrieb angefordert. Diese vorbestimmten Bedingungen können beispielsweise bestimmten Teilbereichen des Last-/Drehzahl-Spektrums entsprechen. Diese Teilbereiche zeichnen sich insbesondere dadurch aus, dass das vom Steuergerät unter Berücksichtigung des Fahrerwunsches geforderte Drehmoment bereits von einer Teilmenge der Zylinder geliefert werden kann. Liegt eine Anforderung für den Teilmotorbetrieb im Steuergerät vor, so verzweigt das Hauptprogramm zum Schritt 3.2, der den Start des Teilmotorbetriebes ausgehend vom Vollmotorbetrieb repräsentiert. Anschließend erfolgt im Schritt 3.3 zunächst eine Verringerung des von der Zylindergruppe 1 bereitgestellten Drehmomentes bzw. Leistung und eine gegenläufige Erhöhung des von der Zylindergruppe 2 gelieferten Drehmomentes bzw. der Leistung.

Die Zylindergruppe 1 bezeichnet hier die Gruppe der zu deaktivierenden Zylinder und die Zylindergruppe 2 bezeichnet hier die Gruppe der weiter zu betreibenden Zylinder. Wenn die Endwerte der geplanten Verringerung bzw. Erhöhung der von den verschiedenen Zylindergruppen gelieferten Drehmomente/Leistungen von den tatsächlichen Werten erreicht sind, werden die Ventile der Zylindergruppe 1 deaktiviert.

Anschließend erfolgt ein Weiterbetrieb des Motors mit einem Teilprogramm für den Teilmotorbetrieb, repräsentiert durch den Schritt 3.4. Liegt dann eine Anforderung für Vollmotorbetrieb im Steuergerät vor, beispielsweise durch einen auf ein höheres Drehmoment zielenden Fahrerwunsch, so verzweigt das Programm zu dem Schritt 3.5, der den Start des Vollmotorbetriebes repräsentiert.

Anschließend erfolgt im Schritt 3.6 eine Aktivierung der Gaswechselventile der Zylindergruppe 1, d. h. der vorher deaktivierten Zylinder. Daran schließt sich im Schritt 3.7 eine Erhöhung der Leistung der Zylindergruppe 1 und eine gegenläufige Verringerung der Leistung der Zylindergruppe 2 an. Die Vorgehensweise nach Schritt 3.7 bedeutet, dass das vor dem Wunsch nach erhöhtem Moment von der Zylindergruppe 2 bereitgestellte Moment zunächst wieder auf die Zylindergruppen 1 und 2 verteilt wird, bevor dann gegebenenfalls durch eine Erhöhung der Leistung/des Drehmomentes beider Zylindergruppen dem Fahrerwunsch nach erhöhtem Moment Rechnung getragen wird.

Alternativ dazu kann im Schritt 3.7 auch die Leistung der Zylindergruppe 2 beibehalten werden und die Leistung der Zylindergruppe 1 sukzessive auf den Wert der Leistung der Zylindergruppe 2 erhöht werden. Mit dieser Alternative ist der Vorteil einer schnelleren Reaktion auf den Fahrerwunsch nach erhöhtem Moment verbunden.

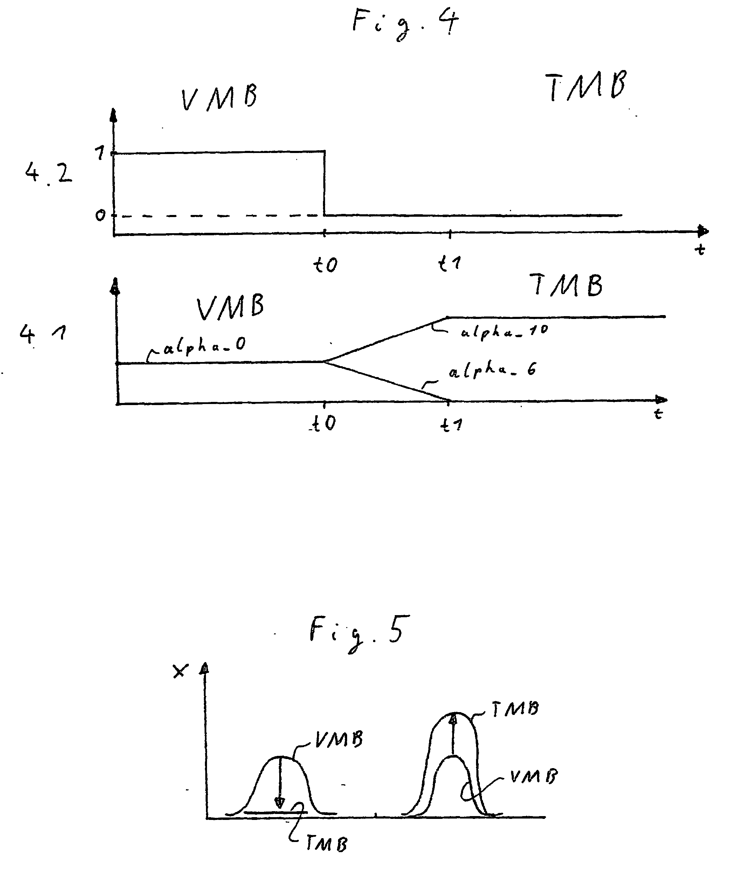

Die Figur 4 veranschaulicht den Verlauf der Öffnungswinkel von 2, den Drosselklappen 6 und 10 aus Figur 1 entsprechenden Leistungsstellgliedern in Korrelation mit dem Aktivierungszustand der Gaswechselventile der zu deaktivierenden Zylinder beim Übergang vom Vollmotorbetrieb in den Teilmotorbetrieb.

In der Figur 4.1 entspricht der Zeitraum links von t0 dem Vollmotorbetrieb (VMB), bei dem beide Drosselklappen 6 und 10 einen Öffnungswinkel alpha_0 haben. Der Zeitraum rechts von t1 entspricht dem Teilmotorbetrieb (TMB). Die Drosselklappe 10 ist gegenüber dem Winkel alpha_0 um einen größeren Winkel alpha_10 geöffnet; die Drosselklappe 6 ist um einen kleineren Winkel alpha_6 geöffnet bzw. ganz geschlossen. Zwischen den Zeitpunkten t0 und t1 vollzieht sich der Übergang vom Vollmotorbetrieb in den Teilmotorbetrieb, soweit es die Drosselklappenstellungen betrifft, mit dem bereits vorher beschriebenen Schließen der Drosselklappe 6 und gegenläufigem Öffnen der Drosselklappe 10. Das Schließen der Drosselklappe 6 entspricht in diesem Ausführungsbeispiel dem Verringern der Leistung der Zylindergruppe 1 aus dem Schritt 3.3 des vorher beschriebenen Flussdiagramms, und die Vergrößerung des Drosselklappenwinkels alpha(10) entspricht der Erhöhung der Leistung bzw. des Drehmomentes der Zylindergruppe 2 ebenfalls entsprechend Schritt 3.3 des genannten Flussdiagramms. Figur 4.2 veranschaulicht den Aktivierungszustand der Gaswechselventile der zu deaktivierenden Zylinder in zeitlicher Korrelation zum Verlauf der Drosselklappenöffnungswinkel gemäß Figur 4.1.

Zum Zeitpunkt t0 wird der Übergang vom Vollmotorbetrieb in den Teilmotorbetrieb mit einem Steuerbefehl ausgelöst. Entsprechend verändern sich die Drosselklappenwinkel in der Figur 4.1. Aufgrund der Trägheit der Gaswechselventilverstellung oder aufgrund einer programmierten Verzögerungszeit werden die Gaswechselventile nicht gleich beim Auftreten des Steuerbefehls deaktiviert, d. h. vom Aktivierungszustand 1 in den Aktivierungszustand 0 versetzt, sondern dies geschieht erst zu einem späteren Zeitpunkt t1, nämlich dann, wenn die vorhergehende Verringerung bzw. Erhöhung der Leistung der verschiedenen Zylindergruppen gemäß Figur 4.1 abgeschlossen ist. Das hier beschriebene Ausführungsbeispiel bezieht sich auf eine Vorrichtung mit zwei Drosselklappen und einer Gaswechselbetätigung, die nur zwischen den Zuständen 1, entsprechend einer Aktivierung der Gaswechselventile und 0, entsprechend einer Deaktivierung der Gaswechselventile binär umgeschaltet werden kann.

Wenn dagegen in einem anderen Ausführungsbeispiel der maximale Ventilub x stetig zwischen dem Wert 0 entsprechend einer Deaktivierung und einem Maximalwert variiert werden kann, bieten sich andere Realisierungsmöglichkeiten der Erfindung an. Dann kann beispielsweise bei einem Verbrennungsmotor mit zwei Zylindergruppen, von denen eine deaktivierbar ist und mit nur einer gemeinsamen Drosselklappe für beide Zylindergruppen die Leistung bzw. das Drehmoment der deaktivierbaren Zylinder über eine stetige Verringerung des Ventilhubes stetig zurückgefahren wird, und gleichzeitig kann die Drosselklappe für alle Zylinder gegenläufig so geöffnet werden, dass sich das gesamte, vom Verbrennungsmotor abgegebene Drehmoment beim Übergang vom Vollmotorbetrieb in den Teilmotorbetrieb nicht ändert.

Ebenfalls kann bei einer vollvariablen Ventilsteuerung, bei der auch die Füllungssteuerung sämtlicher Zylinder über die Gestaltung der Ventilerhebungskurven realisiert wird, bei dem also keine Drosselklappe vorhanden ist, die Erfindung realisiert werden. In diesem Fall werden die Ventilerhebungskurven der zu deaktivierenden Zylinder sukzessive in ihrer Höhe verringert, bis sie den Wert 0 erreichen. Gegenläufig wird die Ventilerhebungskurve der übrigen Zylinder so erhöht, dass sich wieder das gesamte vom Motor abgegebene Drehmoment beim Übergang vom Vollmotorbetrieb in den Teilmotorbetrieb nicht ändert. Dies ist in der Figur 5 veranschaulicht. Die beiden mit VMB bezeichneten Kurven entsprechen den Ventilerhebungskurven der Gaswechselventile aller Zylinder im Vollmotorbetrieb. In diesem Fall sind die Ventilerhebungskurven gleich. Im Teilmotorbetrieb wird die Ventilerhebungskurve der einen Gruppe von Zylindern auf den Wert 0 zurückgefahren und parallel wird die Ventilerhebungskurve der anderen Gruppe von Zylindern erhöht. Im dargestellten Beispiel entspricht dies den mit TMB bezeichneten Ventilerhebungskurven.

## Patentansprüche

1. Verfahren zum Wechsel zwischen Vollmotorbetrieb und Teilmotorbetrieb eines mehrzylindrigen Verbrennungsmotors, bei dem wenigstens die Einlassventile oder die Auslassventile eines Zylinders oder einer Gruppe von Zylindern im Vollmotorbetrieb aktiviert und im Teilmotorbetrieb deaktiviert sind,
- wobei in einem ersten Schritt eine Drosselung der Leistung der zu deaktivierenden Zylinder und gleichzeitig eine Erhöhung der Leistung der anderen Zylinder so erfolgt, dass das vom Motor abgegebene Gesamtmoment einem vorgegebenen Motorsollmoment folgt
- und wobei in einem zweiten Schritt eine Abschaltung der gedrosselten Zylinder über die schaltbaren Ein- oder Auslassventile erfolgt.

2. Verfahren nach Anspruch 1, **dadurch gekennzeichnet, daß** zum Wechsel vom Teilmotorbetrieb zum Vollmotorbetrieb,
- in einem ersten Schritt eine Zuschaltung der gedrosselten Zylinder über die schaltbaren Ein- oder Auslassventile erfolgt
- und in einem zweiten Schritt eine Entdrosselung der Leistung der wieder zu aktivierenden Zylinder und gleichzeitig eine Verringerung der Leistung der anderen Zylinder so erfolgt, dass das vom Motor abgegebene Gesamtmoment einem vorgegebenen Motorsollmoment folgt.

3. Verfahren nach Anspruch 1 bei einem Verbrennungsmotor, bei dem der oder die abzuschaltenden Zylinder eine gemeinsame erste und die weiterzubetreibenden Zylinder eine gemeinsame zweite Drosselvorrichtung besitzen,
**dadurch gekennzeichnet, dass** eine Drosselung der Leistung der zu deaktivierenden Zylinder über ein Schließen der ersten Drosselvorrichtung erfolgt und eine Erhöhung der Leistung der weiterzubetreibenden Zylinder über eine Öffnung der Drosselvorrichtung der weiterzubetreibenden Zylinder erfolgt.

4. Verfahren nach Anspruch 1 bei einem Verbrennungsmotor, bei dem der oder die abzuschaltenden Zylinder eine gemeinsame erste und die weiterzubetreibenden Zylinder eine gemeinsame zweite Drosselvorrichtung besitzen,
**dadurch gekennzeichnet, dass** eine Entdrosselung der wieder zu aktivierenden Zylinder über ein Öffnen der ersten Drosselvorrichtung erfolgt und eine Verringerung der Leistung der übrigen Zylinder über eine verringerte Öffnung der Drosselvorrichtung der übrigen Zylinder erfolgt.

5. Verfahren nach Anspruch 1 bei einem Motor mit verstellbarem Hub der Einlaßventile, **dadurch gekennzeichnet, dass** die Drosselung der Leistung der zu deaktivierenden Zylinder über eine Verringerung des Hubes der zu deaktivierenden Einlassventile erfolgt und die Erhöhung der Leistung der weiterzubetreibenden Zylinder über eine Vergrößerung des Hubes der Einlassventile der weiterzubetreibenden Zylinder erfolgt.

6. Verfahren nach Anspruch 1 bei einem Motor mit verstellbarem Hub der Einlaßventile, **dadurch gekennzeichnet, dass** eine Entdrosselung der wieder zu aktivierenden Zylinder über eine Vergrößerung des Hubes der zu wieder zu aktivierenden Einlassventile erfolgt und eine Verringerung der Leistung der übrigen Zylinder über eine Verringerung des Hubes der Einlassventile der übrigen Zylinder erfolgt.

7. Vorrichtung zur Durchführung der Verfahren nach den Ansprüchen 1 - 6.

## Claims

1. Method for changing between full-engine operation and partial-engine operation of a multi-cylinder internal combustion engine, in which method at least the inlet valves or the outlet valves of a cylinder or of a group of cylinders are activated in full-engine operation and de-activated in partial-engine operation,
- the performance of the cylinders which are to be de-activated being restricted and the performance of the other cylinders being simultaneously increased in a first step, in such a way that the total torque output by the engine follows a predefined desired engine torque,
- and the restricted cylinders being switched off via the switchable inlet or outlet valves in a second step.

2. Method according to Claim 1, **characterized in that**, in order to change from partial-engine operation to full-engine operation,
- the restricted cylinders are switched on via the switchable inlet or outlet valves in a first step,
- and the performance of the cylinders which are to be re-activated is de-restricted and the performance of the other cylinders is simultaneously reduced in a second step, in such a way that the total torque output by the engine follows a predefined desired engine torque.

3. Method according to Claim 1 in an internal combustion engine, in which the cylinder or cylinders to be switched off have a common first restrictor device and the cylinders which are to continue operating have a common second restrictor device, **characterized in that** the performance of the cylinders which are to be de-activated is restricted by closing the first restrictor device, and the performance of the cylinders which are to continue operating is increased by opening the restrictor device of the cylinders which are to continue operating.

4. Method according to Claim 1 in an internal combustion engine, in which the cylinder or cylinders to be switched off have a common first restrictor device and the cylinders which are to continue operating have a common second restrictor device, **characterized in that** the cylinders which are to be re-activated are de-restricted by opening the first restrictor device, and the performance of the remaining cylinders is reduced by reducing the opening of the restrictor device of the remaining cylinders.

5. Method according to Claim 1 in an engine with an adjustable stroke of the inlet valves, **characterized in that** the performance of the cylinders which are to be de-activated is restricted by reducing the stroke of the inlet valves which are to be de-activated, and the performance of the cylinders which are to continue operating is increased by increasing the stroke of the inlet valves of the cylinders which are to continue operating.

6. Method according to Claim 1 in an engine with an adjustable stroke of the inlet valves, **characterized in that** the cylinders which are to be re-activated are de-restricted by increasing the stroke of the inlet valves which are to be reactivated, and the performance of the remaining cylinders is reduced by reducing the stroke of the inlet valves of the remaining cylinders.

7. Apparatus for performing the methods according to Claims 1 to 6.

## Revendications

1. Procédé pour passer un moteur à combustion interne à plusieurs cylindres d'un fonctionnement intégral à un fonctionnement partiel, dans lequel au moins les soupapes d'admission ou les soupapes d'échappement d'un cylindre ou d'un groupe de cylindre sont activées en fonctionnement intégral et désactivées en fonctionnement partiel, selon lequel
- lors d'une première étape, on réalise un étranglement de la puissance du cylindre à désactiver et simultanément une augmentation de la puissance de l'autre cylindre de telle sorte que le couple total délivré par le moteur suit un couple théorique du moteur prédéfini, et
- dans lequel, lors d'une seconde étape, on met hors service les cylindres étranglés à l'aide des soupapes d'admission ou d'échappement commutables.

2. Procédé selon la revendication 1,
**caractérisé en ce que**
pour passer du fonctionnement partiel au fonctionnement intégral
- lors d'une première étape, une mise en service du cylindre étranglé a lieu à l'aide des soupapes d'admission ou d'échappement commutables,
- et lors d'une deuxième étape, on réalise un désétranglement de la puissance du cylindre devant de nouveau être activé et simultanément une diminution de la puissance de l'autre cylindre de telle sorte que le couple total délivré par le moteur suit un couple de moteur théorique prédéfini.

3. Procédé selon la revendication 1 pour un moteur à combustion interne, dans lequel le ou les cylindre(s) devant être mis hors service possède(nt) un premier dispositif d'étranglement commun et le cylindre devant être mis en service possède un deuxième dispositif d'étranglement commun,
**caractérisé en ce qu'**
un étranglement de la puissance du cylindre à désactiver est réalisé en fermant le premier dispositif d'étranglement, et une augmentation de la puissance du cylindre devant continuer à fonctionner a lieu en ouvrant le dispositif d'étranglement du cylindre devant continuer à fonctionner.

4. Procédé selon la revendication 1 pour un moteur à combustion interne, dans lequel le ou les cylindre(s) devant être mis hors service possède(nt) un premier dispositif d'étranglement commun et le cylindre devant continuer à fonctionner possèdent un deuxième dispositif d'étranglement commun,
**caractérisé en ce qu'**
un désétranglement du cylindre devant de nouveau être activé a lieu en ouvrant le premier dispositif d'étranglement, et une diminution de la puissance du cylindre restant a lieu en ouvrant de manière réduite le dispositif d'étranglement du cylindre restant.

5. Procédé selon la revendication 1 pour un moteur avec une course réglable des soupapes d'admission,
**caractérisé en ce que**
l'étranglement de la puissance du cylindre à désactiver a lieu en réduisant la course des soupapes d'admission à désactiver, et l'augmentation de la puissance du cylindre devant continuer à fonctionner a lieu en augmentant la course des soupapes d'admission du cylindre devant continuer à fonctionner.

6. Procédé selon la revendication 1 pour un moteur avec une course réglable des soupapes d'admission,
**caractérisé en ce qu'**
un désétranglement du cylindre devant être de nouveau activé a lieu en augmentant la course des soupapes d'admission devant être de nouveau activées, et une diminution de la puissance du cylindre restant a lieu en réduisant la course des soupapes d'admission du cylindre restant.

7. Dispositif mettant en oeuvre le procédé selon les revendications 1 à 6.
